# EUROPEAN PATENT SPECIFICATION

(11) **EP 1 420 622 B1**
(45) Date of publication and mention of the grant of the patent: **31.10.2007**
(21) Application number: 02257851.2
(22) Date of filing: 14.11.2002
(51) Int. Cl.: H05K 7/20

(54) **Apparatus and method for cooling**
Vorrichtung und Verfahren zum Kühlen
Dispositif et méthode de refroidissement

(43) Date of publication of application: 19.05.2004
(73) Proprietor: Saint Song Corporation, Shen Keng Hsiang, Taipei Hsien (TW)
(72) Inventor: Rong-You, Lee, Nei-Hu Dist, Taipei (TW)
(74) Representative: Lloyd, Patrick Alexander Desmond

(56) References cited:
- WO-A-96/01035
- DE-U- 20 209 392
- US-A- 5 535 094
- US-B1- 6 452 797

## Description

### BACKGROUND OF THE INVENTION

### FIELD OF THE INVENTION

The present invention relates to a heat-dissipating method for a computer host and apparatus thereof, more particularly, a heat-dissipating method for computer hosts by utilizing air-channeling device to direct heat-dissipating flow, and a heat-dissipating apparatus for computer hosts.

### DESCRIPTION OF RELATED ARTS

The speedy upgrading trend in computer industry causes computers to have more and more powerful computing capacity, so do the performing speed for computer hosts and chipsets; yet heat energy generated by computer hosts and chipsets also increases. Therefore, sinks for adding heat-dissipating areas are designed for corresponding to heat sources generating higher rate of heat quantity.

The conventional computer sinks mainly comprise aluminum extrusion, die casting and folding types, wherein the density (total heat-dissipating area per unit area) for both the aluminum extrusion and die casting types of computer sinks is confined, so the volume and weight thereof shall be increased in accordance with heat sources having higher and higher rate of heat generation. Whereas the folding type of computer sinks utilizes metal plates as fins to stack consecutively, thus creating higher density having better heat-dissipating efficiency with volume and weight thereof being acceptable to industries.

For enhancing the heat-dissipating efficiency of computer sinks, a fan is integrated thereto, through appropriate fixating structure, so as to assist in heat dissipation. As the fan is energized, cold air surrounding the fans is to be blown to sinks so as to assist in heat dissipation and thus form a heat-dissipating structure with better heat-dissipating efficiency.

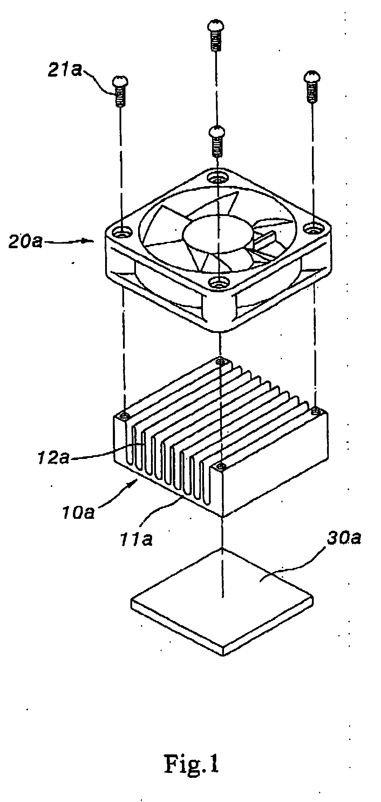

Figure 1 shows that the conventional heat-dissipating assembly structure comprises a sink 10a and a fan 20a, wherein the sink 10a, made of copper or aluminum, has a main body 11a whereon a plurality of fins 12a are formed, with the bottom surface of the main body 11a capable of jointing with the surface of the heat sources 30a such as CPU or chipset so as to assist in heat dissipation.

The fan 20a is mounted on the sink 10a by a screw 21 a, thus when the fan 20a is energized, cold air on top can be caused to blow downwards to the sink 10a, so as to assist in heat dissipation.

However, the fan in a conventional heat-dissipating assembly structure is to blow downwards for heat-dissipating purpose, such design that generates larger wind pressure, thus heat energy cannot be swiftly dissipated. As a result, such convention heat-dissipating structure cannot achieve either the better heat-dissipating efficiency or more powerful heat-dissipating capacity.

Moreover, the conventional heat-dissipating assembly structure can only be utilized for a single heat source without being able to dissipate heat generated from more than one heat source. However, for a common computer host, CPU, north bridge chipset and other heat sources are to be installed therein. Consequently, provided the heat-dissipating structure can only dissipate heat against a single heat source, heat energy generated from other heat sources shall adversely affect the computer. If more than one heat-dissipating structures are disposed therein to respectively dissipate heat generated from each heat source, the production cost shall be increased with larger space being occupied.

Furthermore, since the fan is mounted on the sink in the conventional heat-dissipating assembly structure, the overall height of the structure becomes greater; thus such heightened heat-dissipating assembly structure shall not be applicable to computer hosts having height limitations.

Also, since the greater portion of the high temperature dissipated by the conventional heat-dissipating assembly structure shall still stay in computer hosts, even though fans are utilized for blowing air towards CPU to dissipate heat, high-temperature air kept within computer hosts is to cause adverse affect on the heat-dissipating effect, and due to the fact that fans have to keep running, more electricity shall be wasted.

In addition, an apparatus with an air inlet is disclosed in R.O.C. Patent TW 490127, with an air outlet being disposed on the enclosed side, such that the air-channeling direction is to blow towards the heat-dissipating fin device. Yet such air outlet is not unidirectional, and the air-channeling device disclosed by the present invention is not disclosed by said prior art to improve on the heat-dissipating effect. On the other hand, the U.S. Patent US 2002/0071250 discloses a kind of parallel heat-dissipating plates with slant air-channeling directions, yet a plurality of air-channeling plates are disposed in the fan structure, such design is not identical to that in the present invention. In addition, US 6, 452, 797 discloses a fan cooled card, in which an axial fan is placed in a void in the card and air flow is directed over a component to be cooled via a ducting structure. WO 96/01035 discloses a cooling system, in which air drawn from the exterior of the computer system is directed over multiple components via ducting.

### Summary of the Invention

One object of the present invention is to provide with a heat-dissipating method for a computer host, wherein a heat-dissipating device is mounted on a CPU, such that heat generated by the CPU is partially or wholly conducted to the heat-dissipating device, and a fan is mounted on a north bridge chipset for carrying away heat generated by the north bridge chipset, with airflow generated by the fan being blown to the heat-dissipating device through an air-blowing outlet of the fan.

Another object of the present invention is to provide with a heat-dissipating apparatus comprising an air-blowing device to dissipate heat through blowing sideways, thus generating less wind pressure, such that heat energy can be swiftly dissipated, better heat-dissipating efficiency can be acquired, and greater heat-dissipating capacity can be performed.

Another object of the present invention is to provide with a heat-dissipating apparatus with separate design so as to dissipate heat against two heat sources simultaneously, thus acquiring better heat-dissipating effect, without increasing production cost and occupying greater space.

Another object of the present invention is to provide with a heat-dissipating apparatus having an air-blowing device thereof being disposed on the side of the heat-dissipating device, with a direction of the air-blowing device being identical or parallel to the heat-dissipating direction of the heat-dissipating device, thus the overall height of the whole heat-dissipating apparatus can be lowered, such design that makes the present invention applicable to computer hosts having height limitations, so as to fulfill the requirements for lighter, thinner and miniaturized computers.

Another object of the present invention is to provide with a computer heat-dissipating apparatus capable of dissipating high temperature generated by CPU kept in computer host out of computer host, so as to improve upon the drawback of ineffective heat-dissipating function for computer host, thus acquiring better heat-dissipating efficiency.

The present invention relates to a heat-dissipating method for computer host, whereby a heat-dissipating device is mounted on a CPU, such that heat energy generated by the CPU can be partially or wholly conducted to the heat-dissipating device; a fan is mounted on a north bridge chipset, such that heat energy generated by the north bridge chipset can be carried away, with airflow generated by the fan being blown to the heat-dissipating device through an air-blowing outlet of the fan, characterized in that a channeling device is disposed at the periphery of both the fan and the heat-dissipating device, the channeling device is utilized for directing an air-channeling direction, with such air-channeling direction being substantially parallel to the air-blowing direction by the fan, and the air-blowing direction by the fan is in the air-channeling direction, and the heat-dissipating device is in the air-blowing direction.

According to the present invention, the heat-dissipating device can be any type of conventional sinks utilized in computers, such as aluminum extrusion, die casting and folding types of fins, and such fins are preferably disposed in parallel,

According to the present invention, the fan can be any kind of conventional fans utilized in computers, preferably fans blowing sideways or more preferably fans blowing sideways with an air-blowing outlet. The single air-blowing outlet is either substantially identical or parallel to the fin grooves between parallel fins, preferably identical or parallel.

According to the present invention, the air-channeling device can be formed as any conventional ring-pole shape or ring-pole shape having one or more indentations substantially caused by peripheral surroundings, such as air-channeling device with 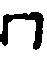 -type ring-pole shape or motherboard formed as 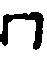 shape, preferably 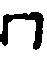 shape and L shape.

One embodiment of the present invention, the heat dissipating apparatus comprising:
a heat-dissipating device utilized for direct or indirect contact with heat source;
an air-blowing device utilized for blowing air out so as to assist in dissipating heat energy accumulated by said heat-dissipating device;
characterised in that air-channeling device is further included so as to substantially cover the periphery of said heat-dissipating device and said air-blowing device, utilized for directing air flow from said air-blowing device to the heat source in an air-channelingdirection being substantially parallel to the air-blowing direction by said air blowing device, thus heat energy accumulated by said heat-dissipating device is dissipated.

According to the present invention, the heat-dissipating device and air-channeling device are as described previously.

According to the present invention, the air-blowing device can be any conventionally fan such as air-conditioners, fans, etc, preferably fans. It is more preferably to utilize fans in accordance with heat-conducting plates, since heat energy generated by the north bridge chipset can be partially or wholly carried away thereby, with airflow generated by the fan being blown to the heat-dissipating device through an air blowing outlet of the fan.

According to the present invention, the heat-dissipating device is as described previously.

Another embodiment of the present invention, the he heat-dissipating device of the present invention comprises:
a heat-dissipating device having a plurality of parallel heat-dissipating fins utilized for direct or indirect contact with heat source;
an air-blowing device utilized for blowing air out so as to assist in dissipating heat energy accumulated by said heat-dissipating device;
characterized in that said heat-dissipating fin and said air-blowing device are formed separately, fins of said heat-dissipating fin being substantially parallel, said air-blowing device having a single air outlet with an air-blowing direction thereof substantially identical or parallel to a direction formed by fin grooves between heat-dissipating fins of said heat-dissipating device.

The heat-dissipating fins and said air-blowing device are as described previously.

In another embodiment of the present invention, the heat-dissipating apparatus comprises:
a heat-dissipating device utilized for contacting a primary heat source directly or indirectly;
an air-blowing device utilized for contacting a secondary heat source and assisting in dissipating heat energy accumulated by said heat-dissipating device;
characterized in that said air-blowing device has a single air outlet, said air-blowing device including a fan and a heat-conducting device, and said heat-conducting device having direct contact with said secondary heat source.

The heat-dissipating device and said air-blowing device are as described previously.

### BRIEF DESCRIPTION OF THE DRAWINGS

These and other features, aspects and advantages of the present invention will become better understood with regard to the following description, appended claims and accompanying drawings that are provided only for further elaboration without limiting or restricting the present invention, where:
Figure 1 shows a perspective sectional view of the conventional heat-dissipating structure;
Figure 2 shows a perspective sectional view of the present invention;
Figure 3 shows a perspective assembly view of the present invention;
Figure 4 shows a perspective assembly view of the present invention from another angle;
Figure 5 shows a top plan view of the present invention; and
Figure 6 shows an air-channeling device of the present invention.

### DETAILED DESCRIPTION OF THE PREFERRED EMBODIMENTS

The following is a detailed description of the best presently known modes of carrying out the inventions. This description is not to be taken in a limiting sense, but is made merely for the purpose of illustrating the general principles of the inventions.

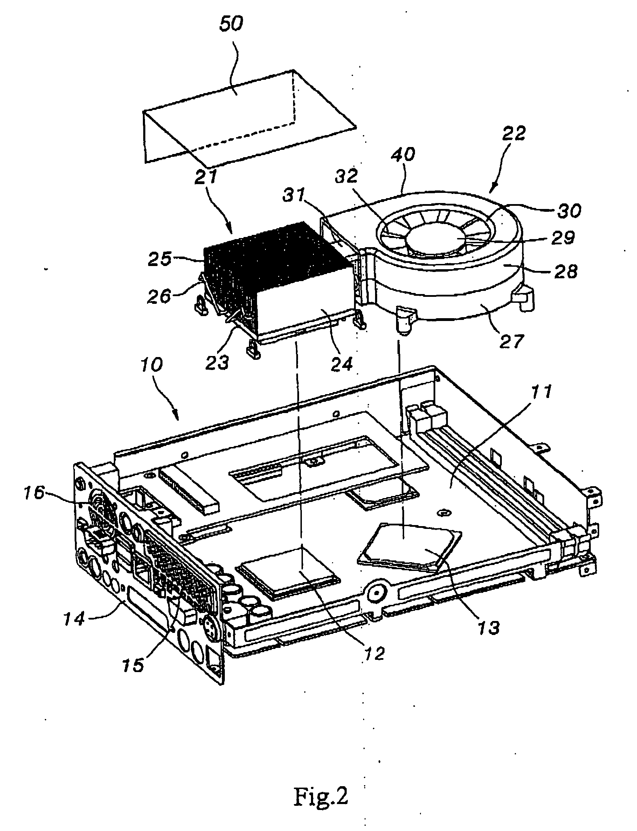

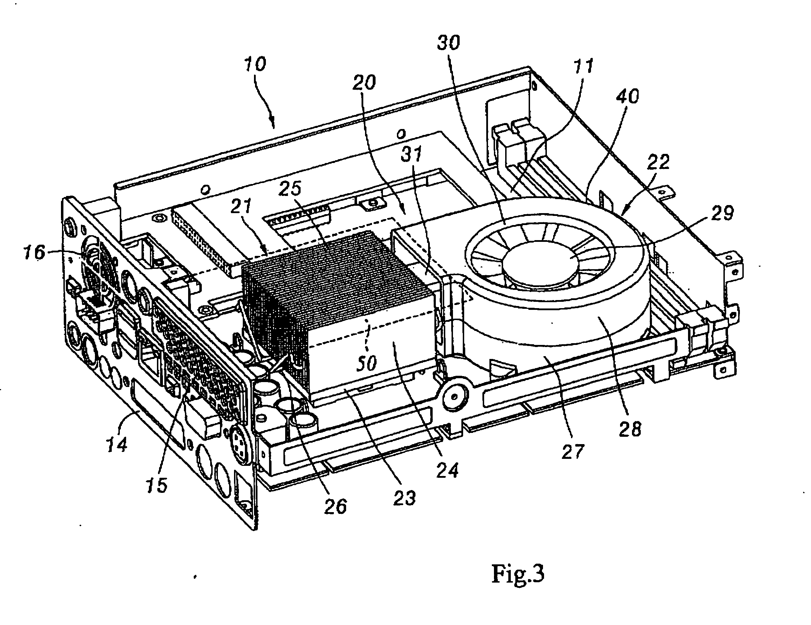

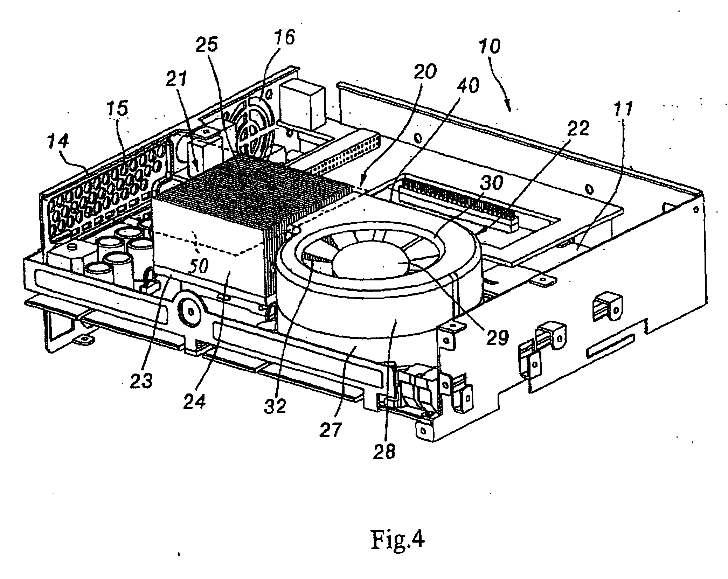

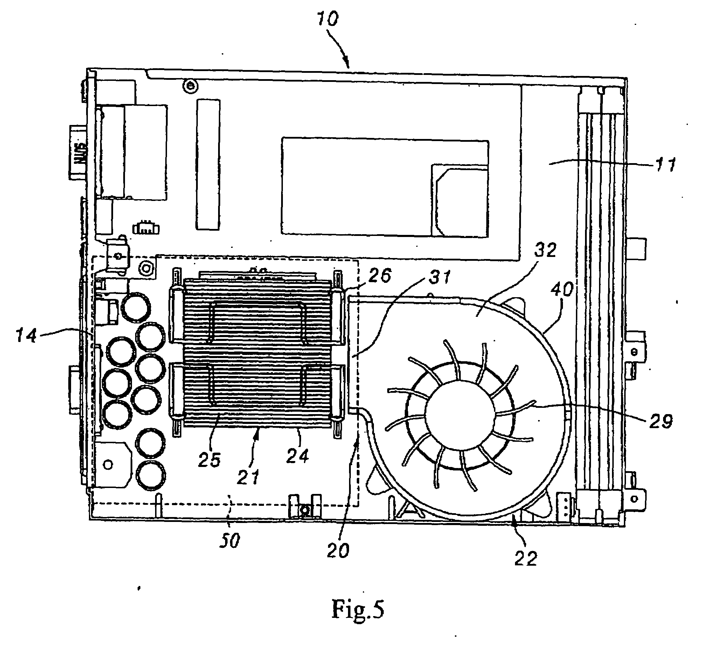

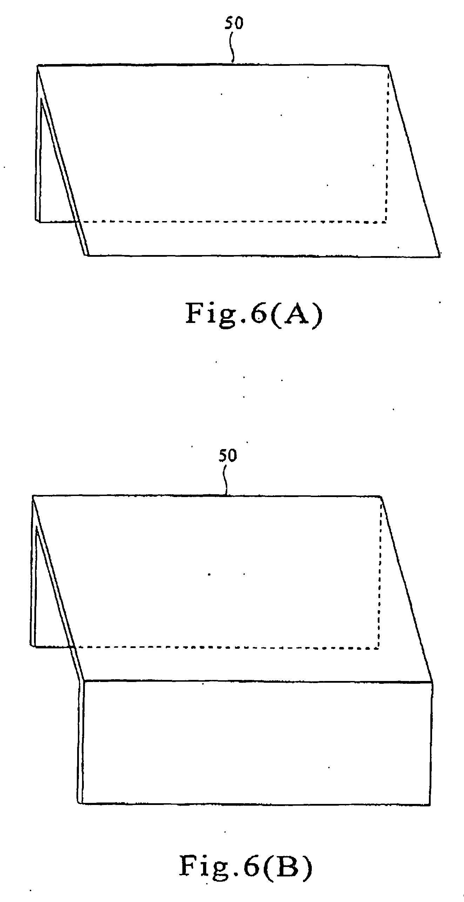

Please refer to Figures 2, 3, 4, 5 and 6. The present invention provides with a computer heat-dissipating assembly structure, more particularly, a computer heat-dissipating apparatus 20 mounted on a motherboard 11 within a computer host 10 for assisting two heat sources 12 and 13 in dissipating heat generated therefrom, wherein the primary heat source 12 is that like a CPU, whereas the secondary heat source 13 is that like a north bridge chipset which generates lower temperature than that of the primary heat source 12.

The computer heat-dissipating apparatus 20 comprises a heat-dissipating device 21 and an air-blowing device 22, wherein the heat-dissipating device 21 can be any type of aluminum extrusion, die casting and folding without limitation. The heat-dissipating device 21, made of effective heat-conducting material such as copper or aluminum, comprises a main body 23 having a plurality of fins 24 jointed thereon, with fin grooves 25 formed between the fins 24 so as to expedite the flow of air. The bottom surface of the main body 23 of the heat-dissipating device 21 is attached to the surface of the primary heat source 12, and a proper fastening means 26 can be mounted for fastening the heat-dissipating device 21 stably on the surface of the primary heat source 12, so as to enable the heat-dissipating device 21 to assist the primary heat source 12 in dissipating heat.

The air-blowing device 22, disposed on the side of the heat-dissipating device 21, is in the identical direction or parallel to the fins 24. The air-blowing device 22 comprises a lower cover 27, an upper cover 28 and a fan-blade body 29, wherein the lower cover 27 is made of effective heat-conducting material such as copper or aluminum, and the upper cover 28 can be made of metal or plastic. The upper cover 28 is mounted on top of the lower cover 27 to be integrally jointed with one another by engagement or utilizing screws to fasten both together, thus forming a housing 40 for the air-blowing device 22. An air inlet 30 is mounted on the top of the housing 40 (namely the top of the upper cover 28), and a protruding air outlet 31 is disposed on one side of the housing 40 (namely one side of both the upper cover 27 and the lower cover 28). A containing chamber 32, disposed within the housing 40, is to link with both the air inlet 30 and the air outlet 31. The bottom surface of the lower cover 27 of the air-blowing device 22 is attached to the surface of the secondary heat source 13, and the lower cover 27 of the air-blowing device 22 is adequately fastened to the motherboard 11, so as to cause the direction of the air outlet 32 to be identical or parallel to the heat-dissipating direction of the heat-dissipating device 21.

The fan-blade body 29 is pivotally disposed within the containing chamber 32 of the housing 40, and a motor is disposed between the fan-blade body 29 and the housing 40 (not shown in drawings), so as to cause the fan-blade body 29 to rotate, during which air is drawn in through the air inlet 30 and discharged through the air outlet 31, so as to enable the air-blowing device to become a slantly-blowing fan. An air-channeling device 50 covers the periphery of both the heat-dissipating device 21 and the air-blowing device 22 so as to enable airflow from the air-blowing device 22 to blow off and thus discharge heat energy accumulated by the heat-dissipating device 21 in the air-channeling direction of the air-channeling device 50, thus the heat-dissipating structure of the present invention is formed thereby.

The heat-dissipating assembly structure can be disposed within the computer host 10, and the heat-dissipating device 21 and the air-blowing device 22 is designed to be separate to each other, so as to enable the heat-dissipating device 21 and the air-blowing device 22 respectively attach to the primary heat source 12 and the secondary heat source 13. Heat energy generated by the secondary heat source 13 such as the north bridge chipset with lesser amount of heat generated can be transferred to the lower cover 27 of the air-blowing device 22, and with the rotation of the fan-blade body 29, cold air is to be introduced through the air inlet 30 on the top of the housing 40 of the air-blowing device 22, and warm air is to be discharged through the air outlet 31 on one side of the housing 40 of the air-blowing device 22, thus dissipating the heat generated by the secondary heat source 13.

Heat energy generated during operation of the primary heat source 12 such as CPU can be transferred to the heat-dissipating device 21, whereon a plurality of fins 24 are formed for increasing the heat-dissipating area so as to cope with the primary heat source 12 having higher rate of heat generation, thus the heat-dissipating efficiency can be improved. In addition, warm air discharged through the air outlet 31 on one side of the housing 40 can dissipate heat for the primary heat source 12 and the heat-dissipating device 21 which are both placed on the outside of the air outlet 31 having high temperature, and warm air discharged through the air outlet 31 of the housing 40 can flow through the fin groove 25, and then hot air is to be discharged out through the air-discharging outlet 15 previously mounted on the side surface of the case 14 of the computer host 10. The shape of the air-discharging outlet 15 is not limited and can be varied according to different needs.

In addition, proper air inlet 16 can also be mounted on the case 14 of the computer host 10, so as to draw cold air into the computer host 10. The shape of the air inlet 16 is not limited and can be varied according to different needs. Another fan (not shown in drawings) can be mounted on the air inlet 16 so as to forcibly draw in cold air, thus achieving better air circulation effect.

The lower cover 27 of the air-blowing device 22 of the present invention provides with heat-conducting and heat-dissipating effect, and the air-blowing device is designed to slantly dissipate heat, thus wind pressure shall be less, and heat energy can be swiftly discharged, so as to acquire better heat-dissipating efficiency and greater heat-dissipating capacity can be achieved. Furthermore, the computer heat-dissipating structure of the present invention is designed to be separate, so as to dissipate heat generated from both heat sources 12 and 13 simultaneously, thus better heat-dissipating efficiency can be achieved. With such simple structural design of the present invention, the manufacutring cost shall not be increased and more space is not needed.

Moreover, the air-blowing device 22 of the present invention is disposed on the side of the heat-dissipating device 21, thus the overall height of the whole heat-dissipating apparatus 20 can be lowered, enabling the present invention to be applicable to computers having height limit.

In addition, the present invention actually discharges the high-temperature air generated by heat sources in a computer host such as CPU and the north bridge chipset slantly from the computer host, and with external cold air drawn by the air inlet 16 into the computer host 10, better air circulation can be achieved.

Furthermore, an air-channeling device 50 covers the periphery of both the heat-dissipating device 21 and the air-blowing device 22, enabling airflow generated by the air-blowing device 22 to dissipate heat energy accumulated in the heat-dissipating device 21 in the air-channeling direction of the air-channeling device 50, thus improving upon the drawback of ineffective heat-dissipating condition within computer host and acquire better heat-dissipating efficiency.

Although the present invention has been described in considerable detail with reference to certain preferred embodiments thereof, those skilled in the art can easily understand that all kinds of alterations and changes can be made within the scope of the appended claims. Therefore, the scope of the appended claims should not be limited to the description of the preferred embodiments contained herein.

## Claims

1. A method for computer host heat dissipation, a heat-dissipating device (21) being mounted on a CPU utilized for partially or wholly conducting heat generated by said CPU to said heat-dissipating device (21), a fan (29) being mounted on a north bridge chipset utilized for partially or wholly dissipating heat generated by said north bridge chipset, said fan (29) having an air outlet (31) utilized for blowing air flow towards said heat-dissipating device (21) in an air-blowing direction, **characterized in that** a channelling device (50) is disposed at the periphery of both said fan (29) and said heat-dissipating device (21); said channelling device (50) is utilized for directing an air-channeling direction, with such air-channeling direction being substantially parallel to the air-blowing direction by said fan (29), and said air- blowing direction by said fan (29) is in said air-channeling direction, and said heat-dissipating device (21) is in said air-blowing direction.

2. The method for computer host heat dissipation as in claim 1, wherein said heat-dissipating device (21) is formed by parallel fins (24), and the fin grooves (25) are disposed to be identical or parallel to the direction of both said air-blowing direction by said fan (29) and said air-channeling direction.

3. The method for computer host heat dissipation as in claim 2, wherein a heat-conducting plate (27) is further disposed between said fan(29) and said north bridge chipset.

4. A heat-dissipating apparatus comprising:
a heat-dissipating device (21) utilized for direct or indirect contact with heat source (12);
an air-blowing device (22) utilized for blowing air out so as to assist in dissipating heat energy accumulated by said heat-dissipating device (21);
**characterized in that** an air-channeling device (50) is further included so as to substantially cover the periphery of said heat-dissipating device (21) and said air-blowing device (22), utilized for directing air flow from said air-blowing device (22) to said heat source (12) in an air-channelingdirection being substantially parallel to the air-blowing direction by said air blowing device (22), thus heat energy accumulated by said heat-dissipating device (21) is dissipated.

5. The heat-dissipating apparatus as in claim 4, wherein said heat-dissipating device (21) and said air-blowing device (22) are separately formed, with the air-blowing direction by said air-blowing device (22) and said air-channeling direction by said air-channeling device (50) being substantially identical.

6. The heat-dissipating apparatus as in claim 5, wherein said heat-dissipating device (21) is a heat-dissipating fin (24), said air-blowing device (22) being a fan having substantially an air inlet (30) and an air outlet (31).

7. The heat-dissipating apparatus as in claim 6, wherein said heat-dissipating device (21) has a plurality of parallel heat-dissipating fins (24) with the direction of fin grooves (25) between parallel fins (24) substantially being identical or parallel to said air-channeling direction by said air-channeling device (50).

8. The heat-dissipating apparatus as in claim 4, 5, 6 or 7 wherein said air-channeling device is a 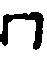 -shaped or an L-shaped cover.

9. The heat-dissipating apparatus as in claim 4, wherein:
the heat source contacted directly or indirectly by the heat-dissipating device (21) is a primary heat source (12);
the air-blowing device (22) is further utilized for contacting a secondary heat source (13); and
the air-blowing device (22) has a single air outlet (31), the air blowing device (22), including a fan (29) and a heat-conducting device (27), and the heat -conducting device (27) having direct contact with the secondary heat source (13).

10. The heat-dissipating apparatus as in claim 9, wherein an air-channeling device (50) is further included so as to substantially cover the periphery of said heat-dissipating device (21) and said air-blowing device (22), and direct air flow from said air-blowing device (22) in an air-channeling direction of said air-channeling device (50), thus heat energy accumulated by said heat-dissipated device (21) is dissipated.

11. The heat-dissipated apparatus as in claim 10, wherein said air-channeling device (50) is a 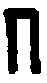 -shaped or an L-shaped cover.

12. The heat-dissipating apparatus as in claim 11, wherein said air-blowing device (22) is formed by parallel heat-dissipating fins (24), and the direction of the fin grooves (25) between parallel fins (24), the air-blowing direction by said air-blowing device (22) and the air-channeling direction of said air-channeling device (50) are substantially identical or parallel.

## Patentansprüche

1. Verfahren zum Ableiten von Rechnerhostwärme, bei dem eine wärmeableitende Vorrichtung (21) an einer Zentraleinheit (CPU) montiert wird, die genutzt wird, um von der genannten Zentraleinheit erzeugte Wärme teilweise oder vollständig zur genannten wärmeableitenden Vorrichtung (21) zu leiten, wobei ein Ventilator (29) an einem Nordbrücken-Chipsatz montiert wird, der zum teilweisen oder vollständigen Ableiten der von dem genannten Nordbrücken-Chipsatz erzeugten Wärme genutzt wird, wobei der Ventilator (29) einen Luftauslass (31) hat, der zum Blasen eines Luftstroms in Richtung auf die genannte wärmeableitende Vorrichtung (21) in einer Luftblasrichtung genutzt wird, **dadurch gekennzeichnet, dass** eine Kanalbildungsvorrichtung (50) an der Peripherie des genannten Ventilators (29) und der genannten wärmeableitenden Vorrichtung (21) angeordnet ist, wobei die genannte Kanalbildungsvorrichtung (50) zum Lenken einer Luftkanalbildungsrichtung genutzt wird, wobei eine solche Luftkanalbildungsrichtung im Wesentlichen parallel zur Luftblasrichtung des genannten Ventilators (29) ist und wobei die genannte Luftblasrichtung von dem genannten Ventilator (29) in der genannten Luftkanalbildungsrichtung ist und die genannte wärmeableitende Vorrichtung (21) in der genannten Luftblasrichtung ist.

2. Verfahren zum Ableiten von Rechnerhostwärme nach Anspruch 1, bei dem die genannte wärmeableitende Vorrichtung (21) von parallelen Rippen (24) gebildet wird und die Rippenzwischenräume (25) so angeordnet sind, dass sie mit der Richtung der genannten Luftblasrichtung von dem genannten Ventilator (29) und der genannten Luftkanalbildungsrichtung identisch oder parallel sind.

3. Verfahren zum Ableiten von Rechnerhostwärme nach Anspruch 2, bei dem ferner eine wärmeleitende Platte (27) zwischen dem genannten Ventilator (29) und dem genannten Nordbrücken-Chipsatz angeordnet wird.

4. Wärmeableitvorrichtung, die Folgendes umfasst:
eine wärmeableitende Vorrichtung (21), die zum direkten oder indirekten Kontakt mit der Wärmequelle (12) genutzt wird;
eine luftblasende Vorrichtung (22), die die Aufgabe hat, Luft auszublasen, um zum Ableiten der von der genannten wärmeableitendem Vorrichtung (21) angestauten Wärmeenergie beizutragen;
**dadurch gekennzeichnet, dass** ferner eine Luftkanalbildungsvorrichtung (50) eingebaut ist, um im Wesentlichen die Peripherie der genannten wärmeableitenden Vorrichtung (21) und der genannten luftblasenden Vorrichtung (22) zu bedecken, die zum Richten des Luftstroms von der genannten luftblasenden Vorrichtung (22) zur genannten Wärmequelle (12) in einer Luftkanalbildungsrichtung genutzt wird, die im Wesentlichen parallel zur Luftblasrichtung der genannten luftblasenden Vorrichtung (22) ist, so dass von der genannten wärmeableitenden Vorrichtung (21) angestaute Wärmeenergie abgeleitet wird.

5. Wärmeableitvorrichtung nach Anspruch 4, bei der die genannte wärmeableitende Vorrichtung (21) und die genannte luftblasende Vorrichtung (22) separat ausgebildet sind, wobei die Luftblasrichtung der genannten luftblasenden Vorrichtung (22) und die genannte Luftkanalbildungsrichtung der genannten Luftkanalbildungsvorrichtung (50) im Wesentlichen identisch sind.

6. Wärmeableitvorrichtung nach Anspruch 5, bei der die genannte wärmeableitende Vorrichtung (21) eine wärmeableitende Rippe (24) ist, wobei die genannte luftblasende Vorrichtung (22) ein Ventilator ist, der im Wesentlichen einen Lufteinlass (30) und einen Luftauslass (31) hat.

7. Wärmeableitvorrichtung nach Anspruch 6, bei der die genannte wärmeableitende Vorrichtung (21) eine Mehrzahl von parallelen wärmeableitenden Rippen (24) hat, wobei die Richtung der Rippenzwischenräume (25) zwischen parallelen Rippen (24) im Wesentlichen mit der genannten Luftkanalbildungsrichtung der genannten Luftkanalbildungsvorrichtung (50) identisch oder parallel ist.

8. Wärmeableitvorrichtung nach Anspruch 4, 5, 6 oder 7, bei der die genannte Luftkanalbildungsvorrichtung eine 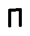 oder L-förmige Abdeckung ist.

9. Wärmeableitvorrichtung nach Anspruch 4, bei der:
die mit der wärmeableitenden Vorrichtung (21) direkt oder indirekt in Kontakt befindliche Wärmequelle eine primäre Wärmequelle (12) ist;
die luftblasende Vorrichtung (22) ferner genutzt wird, um mit einer sekundären Wärmequelle (13) in Kontakt zu sein, und
die Luftblasvorrichtung (22) einen einzelnen Luftauslass (31) hat, wobei die Luftblasvorrichtung (22) einschließlich einem Ventilator (29) und einer wärmeleitenden Vorrichtung (27) und die wärmeleitende Vorrichtung (27) direkten Kontakt mit der sekundären Wärmequelle (13) haben.

10. Wärmeableitvorrichtung nach Anspruch 9, bei der ferner eine Luftkanalbildungsvorrichtung (50) eingebaut ist, um im Wesentlichen die Peripherie der genannten wärmeableitenden Vorrichtung (21) und der genannten luftblasenden Vorrichtung (22) zu bedecken und den Luftstrom von der genannten luftblasenden Vorrichtung (22) in einer Luftkanalbildungsrichtung der genannten Luftkanalbildungsvorrichtung (50) zu richten, so dass von der genannten wärmeableitenden Vorrichtung (21) angestaute Wärmeenergie abgeleitet wird.

11. Wärmeableitvorrichtung nach Anspruch 10, bei der die genannte Luftkanalbildungsvorrichtung (50) eine 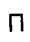 -förmige oder eine L-förmige Abdeckung ist

12. Wärmeableitvorrichtung nach Anspruch 10, bei der die genannte luftblasende Vorrichtung (22) von parallelen wärmeableitenden Rippen (24) gebildet wird und die Richtung der Rippenzwischenräume (25) zwischen parallelen Rippen (24), die Luftblasrichtung der genannten luftblasenden Vorrichtung (22) und die Luftkanalbildungsrichtung der genannten Luftkanalbildungsvorrichtung (50) im Wesentlichen identisch oder parallel sind.

## Revendications

1. Procédé de dissipation thermique d'un hôte informatique, un dispositif de dissipation thermique (21) étant monté sur une UC et utilisé pour conduire partiellement ou totalement la chaleur générée par ladite UC jusqu'audit dispositif de dissipation thermique (21), un ventilateur (29) étant monté sur un jeu de puces en pont nord utilisé pour dissiper partiellement ou totalement la chaleur générée par ledit jeu de puces en pont nord, ledit ventilateur (29) ayant une sortie d'air (31) utilisée pour souffler un flux d'air vers ledit dispositif de dissipation thermique (21) dans un sens de soufflage d'air, **caractérisé en ce qu'**un dispositif de canalisation (50) est disposé à la périphérie à la fois dudit ventilateur (29) et dudit dispositif de dissipation thermique (21) ; ledit dispositif de canalisation (50) est utilisé pour diriger dans un sens de canalisation d'air, ledit sens de canalisation d'air étant sensiblement parallèle au sens de soufflage d'air par ledit ventilateur (29), et ledit sens de soufflage d'air par ledit ventilateur (29) est dans ledit sens de canalisation d'air, et ledit dispositif de dissipation thermique (21) se trouve dans ledit sens de soufflage d'air.

2. Procédé de dissipation thermique d'un hôte informatique selon la revendication 1, dans lequel ledit dispositif de dissipation thermique (21) est formé par des ailettes parallèles (24), et les rainures d'ailettes (25) sont disposées pour être identiques ou parallèles au sens à la fois dudit sens de soufflage d'air par ledit ventilateur (29) et dudit sens de canalisation d'air.

3. Procédé de dissipation thermique d'un hôte informatique selon la revendication 2, dans lequel une plaque de conduction thermique (27) est disposée en outre entre ledit ventilateur (29) et ledit jeu de pouces en pont nord.

4. Appareil de dissipation thermique comprenant :
un dispositif de dissipation thermique (21) utilisé pour un contact direct ou indirect avec une source de chaleur (12) ;
un dispositif de soufflage d'air (22) utilisé pour souffler de l'air vers l'extérieur de façon à aider à dissiper l'énergie thermique accumulée par ledit dispositif de dissipation thermique (21) ;
**caractérisé en ce qu'**un dispositif de canalisation d'air (50) est inclus en outre de façon à couvrir sensiblement la périphérie dudit dispositif de dissipation thermique (21) et dudit dispositif de soufflage d'air (22), utilisé pour diriger un flux d'air depuis ledit dispositif de soufflage d'air (22) vers ladite source de chaleur (12) dans un sens de canalisation d'air sensiblement parallèle au sens de soufflage d'air par ledit dispositif de soufflage d'air (22), dissipant ainsi l'énergie thermique accumulée par ledit dispositif de dissipation thermique (21).

5. Appareil de dissipation thermique selon la revendication 4, dans lequel ledit dispositif de dissipation thermique (21) et ledit dispositif de soufflage d'air (22) sont formés séparément, le sens de soufflage d'air par ledit dispositif de soufflage d'air (22) et ledit sens de canalisation d'air par ledit dispositif de canalisation d'air (50) étant sensiblement identiques.

6. Appareil de dissipation thermique selon la revendication 5, dans lequel ledit dispositif de dissipation thermique (21) est une ailette de dissipation thermique (24), ledit dispositif de soufflage d'air (22) étant un ventilateur ayant sensiblement une admission d'air (30) et une sortie d'air (31).

7. Appareil de dissipation thermique selon la revendication 6, dans lequel ledit dispositif de dissipation thermique (21) comporte une pluralité d'ailettes de dissipation thermique parallèles (24), le sens des rainures d'ailettes (25) entre des ailettes parallèles (24) étant sensiblement identique ou parallèle audit sens de canalisation d'air par ledit dispositif de canalisation d'air (50).

8. Appareil de dissipation thermique selon la revendication 4, 5, 6 ou 7, dans lequel ledit dispositif de canalisation d'air est un couvercle en forme de 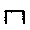 ou en forme de L.

9. Appareil de dissipation thermique selon la revendication 4, dans lequel :
la source de chaleur contactée directement ou indirectement par le dispositif de dissipation thermique (21) est une source de chaleur principale (12) ;
le dispositif de soufflage d'air (22) est utilisé en outre pour contacter une source de chaleur secondaire (13) ; et
le dispositif de soufflage d'air (22) comporte une sortie d'air unique (31), le dispositif de soufflage d'air (22), comportant un ventilateur (29) et un dispositif de conduction thermique (27), et le dispositif de conduction thermique (27) ayant un contact direct avec la source de chaleur secondaire (13).

10. Appareil de dissipation thermique selon la revendication 9, dans lequel un dispositif de canalisation d'air (50) est inclus en outre de façon à couvrir sensiblement la périphérie dudit dispositif de dissipation thermique (21) et dudit dispositif de soufflage d'air (22), et diriger un flux d'air depuis ledit dispositif de soufflage d'air (22) dans un sens de canalisation d'air dudit dispositif de canalisation d'air (50), dissipant ainsi l'énergie thermique accumulée par ledit dispositif de dissipation thermique (21).

11. Appareil de dissipation thermique selon la revendication 10, dans lequel ledit dispositif de canalisation d'air (50) est un couvercle en forme de 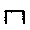 ou en forme de L.

12. Appareil de dissipation thermique selon la revendication 11, dans lequel ledit dispositif de soufflage d'air (22) est formé par des ailettes de dissipation thermique parallèles (24), et le sens des rainures d'ailettes (25) entre des ailettes parallèles (24), le sens de soufflage d'air par ledit dispositif de soufflage d'air (22) et le sens de canalisation d'air dudit dispositif de canalisation d'air (50) sont sensiblement identiques ou parallèles.
